# EUROPÄISCHE PATENTSCHRIFT

(11) **EP 1 476 058 B1**
(45) Veröffentlichungstag und Bekanntmachung des Hinweises auf die Patenterteilung: **04.04.2007**
(21) Anmeldenummer: 03700008.0
(22) Anmeldetag: 13.01.2003
(51) Int. Cl.: A47J 17/02

(54) **GEMÜSESCHÄLER**
VEGETABLE PEELER
EPLUCHE-LEGUMES

(30) Priorität: 22.02.2002 CH 314022002; 05.06.2002 CH 943022002
(43) Veröffentlichungstag der Anmeldung: 17.11.2004
(73) Patentinhaber: Rasa, Iwan, 8505 Pfyn (CH); Rasa, Nousha, 8505 Pfyn (CH)
(72) Erfinder: Rasa, Iwan, 8505 Pfyn (CH); Rasa, Nousha, 8505 Pfyn (CH)
(86) Internationale Anmeldenummer: PCT/CH2003/000010
(87) Internationale Veröffentlichungsnummer: WO 2003/070070

(56) Entgegenhaltungen:
- US-A- 2 986 813
- US-A- 5 865 110
- PATENT ABSTRACTS OF JAPAN vol. 1998, no. 11, 30. September 1998 (1998-09-30) & JP 10 155647 A (YOSHIDA KIYOTOSHI), 16. Juni 1998 (1998-06-16)

## Beschreibung

Die Erfindung bezieht sich auf einen Gemüseschäler nach dem Oberbegriff des Patentanspruchs 1.

Gemüseschäler sind seit langem bekannt und im Handel erhältlich. Weit verbreitet sind Gemüseschäler, bei denen das Schälmesser in Form einer sogenannten Pendelklinge ausgebildet ist, wobei diese eine Schneidklinge, auch Schneide genannt, und eine parallel dazu verlaufende Führungsplatte, auch Führungssteg genannt, aufweist, die die Dicke des abzuschälenden Teiles begrenzt. Derartige Schälmesser sind entweder einseitig ähnlich wie ein Messer an einem Stiel gehalten oder beidseitig zwischen zwei Seitenflächen gelagert, die oftmals zu einem Bügel auslaufen und, von dem Schälmesser beabstandet, einen Griff bilden.

Gemüseschäler mit einseitig an einem Griff gehaltenen Pendelklingen sind beispielsweise aus den US-A-2 252 094, US-A-2 351 327 oder US-A-3 956 825 bekannt. Die dort beschriebenen Ausführungsformen unterscheiden sich im wesentlichen lediglich in der Art der schwenkbeweglichen Lagerung der Pendelklinge.

Gemüseschäler mit beidseitig gelagerten Pendelklingen sind beispielsweise aus der US-A-2 986 813 oder der JP-A-10 155 647 bekannt. Bei dem aus der letztgenannten Druckschrift bekannten Gemüseschäler ist der parallel zur Schneide verlaufende Führungssteg unterteilt, wodurch dieser flexibel ist und je nach aufgewendetem Druck eine mehr oder weniger dicke Schalenscheibe des Gemüses abgeschält werden kann.

Bei einem Gemüseschäler mit einseitig gehaltener Pendelklinge hält der Benutzer üblicherweise den Griff, welcher sich seitlich weg von der Pendelklinge erstreckt. Die Benutzung eines solchen Gemüseschälers erfolgt im wesentlichen durch eine Schwenkbewegung ähnlich derjenigen eines Messers. Gemüseschäler mit beidseitig in Form einer Pendelklinge ausgebildetem Schälmesser werden häufig mit einer Zugbewegung zum Benutzer hin oder mit einer Druckbewegung vom Benutzer weg gehandhabt, wobei die Klinge der Zug- oder Druckbewegung folgt. Je nach Ausführungsform ist die Distanz zwischen dem Schälmesser und dem Griff mehr oder weniger gross.

Aus US 5865110 und US2274815A, welches den nächstliegenden Stand der Technik darstellt, sind Gemüseschäler bekannt, die in der Anwendung unhandlich sind.

Der Erfindung liegt die Aufgabe zugrunde, einen Gemüseschäler der eingangs erwähnten Art zu schaffen, welcher leichter handhabbar ist.

Diese Aufgabe wird erfindungsgemäss durch einen Gemüseschäler mit den Merkmalen des Patentanspruchs 1 gelöst. Vorteilhafte Weiterbildungen sind Gegenstand der jeweils abhängigen Ansprüche.

Erfindungsgemäss sind die Seitenflächen als Griffflächen ausgebildet. Dadurch ist eine möglichst direkte Führung des Schälmessers möglich, so dass zwischen der Hand des Benutzers und dem Schälmesser praktisch kein Hebelarm mehr vorhanden ist. Diese direkte oder unmittelbare Führung des Schälmessers lässt eine bessere Anpassung der Bewegung des Schälmessers an die Kontur des zu schälenden Gemüses zu. Im Sinne einer Doppelwirkung dienen die Seitenflächen einerseits zum Aufnehmen bzw. Befestigen des Schälmessers, andererseits als Grifffläche zum Hatten und Handhaben des Gemüseschälers, somit ist die Breite des Gemüseschälers im Verhältnis zu der Länge grösser.

Gemäss einer Weiterbildung der Erfindung sind die Griffflächen derart ausgestaltet, dass sie zwischen dem Daumen und wenigstens einem der Finger einer Hand festklemmbar sind. Dadurch kann sich das Schälmesser unmittelbar an der Handinnenfläche befinden und ist so besonders einfach und exakt zu führen. Ebenso einfach ist von der Hand des Benutzers der erforderliche Druck zum Halten und Betätigen des Gemüseschälers aufzubringen.

Vorteilhafterweise bildet jede Seitenfläche eine Lagerfläche für das Schälmesser, wobei vorzugsweise die Seitenflächen über einen Steg miteinander verbunden sind, welcher quer zur Schälrichtung verläuft und als Dekor- oder Werbefläche gestaltet ist. Ein Steg kann die Steifigkeit des Gemüseschälers, insbesondere die Verwindungssteifigkeit desselben, verbessern, so dass das Schälmesser selbst weniger stabil als bei einer Ausführungsform des Gemüseschälers ohne Steg ausgebildet sein kann. Die Ausbildung jeder Seitenfläche als Lagerfläche ermöglicht eine Beweglichkeit des Schälmessers und damit eine bessere Anpassung des Schälmessers an die Kontur des zu schälenden Gemüses. Die Nutzung des Steges als Dekor- oder Werbefläche stellt eine Doppelwirkung des Steges dar und kann deshalb auch zu einem fortschrittlichen, ansprechenden Aussehen des Gemüseschälers beitragen.

Gemäss einer anderen Weiterbildung der Erfindung ist der Steg konvex nach oben vom Schälmesser weg oder konkav nach unten zum Schälmesser hin gewölbt.

Gemäss einer bevorzugten Ausführungsform der Erfindung ist das Schälmesser in Form einer drehbar an den Seitenflächen gehaltenen Pendelklinge ausgebildet. Die Pendelklinge ist somit drehbar gelagert, so dass sie sich besonders leicht und schnell an die Aussenkontur des zu schälenden Gemüses anpassen kann. Dadurch ist es weniger häufig erforderlich, den Gemüseschäler an die Kontur des zu schälenden Gemüses anzupassen; vielmehr stellt sich das als Pendelklinge ausgebildete Schälmesser automatisch auf die zu schälende Kontur des Gemüses ein.

Vorteilhafterweise sind die Seitenflächen und der Steg einstückig oder mehrstückig vorzugsweise flächig oder bandförmig aus Metallblech oder Kunststoff gefertigt. Dadurch kann die Herstellung des Gemüseschälers vereinfacht sein. Ein solcher Gemüseschäler ist daher auch sehr kostengünstig herstellbar.

Gemäss einer weiteren Ausführungsform der Erfindung ist in jeder Seitenfläche eine Griffmulde eingeformt, wobei die Griffmulde vorzugsweise auf der dem Schälmesser gegenüber liegenden Seite der jeweiligen Seitenfläche angeordnet ist. Derart mit Griffmulden versehene Seitenflächen können von den innenliegenden Fingerkuppen besonders gut ergriffen werden, so dass sich die Finger stabil an den Seitenflächen abstützen können. Auch besonders harte Gemüse können mit einem solchen Schäler effektiv geschält werden, da ein solcher Gemüseschäler gut in der Hand liegt und ein Abrutschen der Finger des Benutzers vom Gemüseschäler weitgehend verhindert ist.

Vorteilhafterweise weist wenigstens eine der Seitenflächen einen Anschlag für das Schälmesser auf. Damit ist die Auslenkung des Schälmessers begrenzt, wodurch die Sicherheit beim Schälen insbesondere bei stark gewölbten Oberflächen einzelner Gemüsesorten verbessert werden kann.

Wie zuvor erwähnt, wird die zuvor genannte Aufgabe auch durch einen Gemüseschäler mit den Merkmalen des Patentanspruchs 10 gelöst. Dieser Gemüseschäler ist auf einen Gemüseschäler der zuvor beschriebenen Art bezogen.

Bei dem Gemüseschäler gemäss Patentanspruch 10 ist das Schälmesser in der Schälebene oder parallel zu dieser schräg zur Schälrichtung angeordnet. Gerade zu Beginn und am Ende des Schälprozesses ist dadurch die Kontaktfläche zwischen dem Schälmesser und dem zu schälenden Gemüse verringert, wodurch weniger Kraft für das Schälen des Gemüses aufzubringen ist. Ausserdem ist der Schälprozess mittels des schräg zur Schälrichtung angeordneten Schälmessers einfacher durchführbar, da das zu schälende Gemüse etwa sägeartig abgeschält wird, wohingegen im Falle eines quer zur Schälrichtung angeordneten Schälmessers das Gemüse durch das Schälmesser eher gespalten wird. Der sägeartig durchzuführende Schälprozess erfordert jedoch einen viel geringeren Kraftaufwand als bei dem zuvor beschriebenen Spalten des Gemüses.

Gemäss einer bevorzugten Ausführungsform der Erfindung ist zwischen der Längsachse des Schälmessers und einer in der Schälebene befindlichen Achse quer zur Schälrichtung ein Winkel vorzugsweise zwischen 3 und 25°, insbesondere zwischen 10 und 15°, ausgebildet. Ein solcher Winkel hat sich für die praktische Handhabung des Gemüseschälers besonders bewährt und stellt einen Kompromiss zwischen einem relativ grossen Winkel, welcher Vorteile bei der sägeartigen Abschälung des Gemüses bieten kann, und einem kleinen Winkel dar, durch den die Breite der abgehobenen Gemüseschale vergrössert ist.

Gemäss einer anderen Weiterbildung der Erfindung ist das Schälmesser derart schräg zur Schälebene angeordnet, dass Vorderkante und Hinterkante des Schälmessers in verschiedenen Ebenen liegen. Hier arbeitet das Schälmesser etwa in Form eines Hobels, wodurch sich in Abhängigkeit von der Konsistenz des zu schälenden Gemüses Vorteile bei der praktischen Handhabung des Gemüseschälers ergeben können.

Ausführungsbeispiele des Erfindungsgegenstandes werden nachfolgend anhand der Zeichnung näher erläutert. Es zeigen:
- Fig. 1: eine schematische Draufsicht auf eine Ausführungsform eines Gemüseschälers;
- Fig. 2: eine schematische Seitenansicht des in Fig. 1 gezeigten Gemüseschälers ohne dessen Schälmesser;
- Fig. 3: eine Vorderansicht des Gemüseschälers ohne Schälmesser ;
- Fig. 4: eine Abwicklung auf den Gemüseschäler gemäss Fig. 1 ohne Schälmesser,
- Fig. 5 bis 10: Draufsichten auf verschiedene Ausführungsformen des Gemüseschälers mit unterschiedlich gestaltetem Steg.

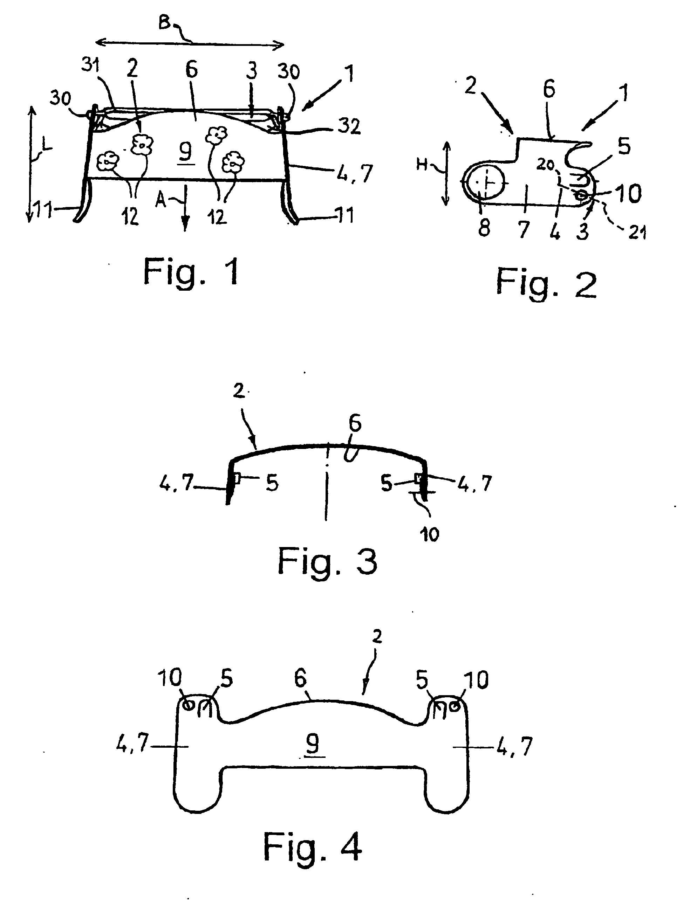

In Fig. 1 ist ein Gemüseschäler 1 gemäss einer ersten Ausführungsform schematisch In einer Draufsicht gezeigt. Der Gemüseschäler 1 hat zwei Elemente, nämlich einen Halter 2 und ein darin schwenkbar gehaltenes Schälmesser 3.

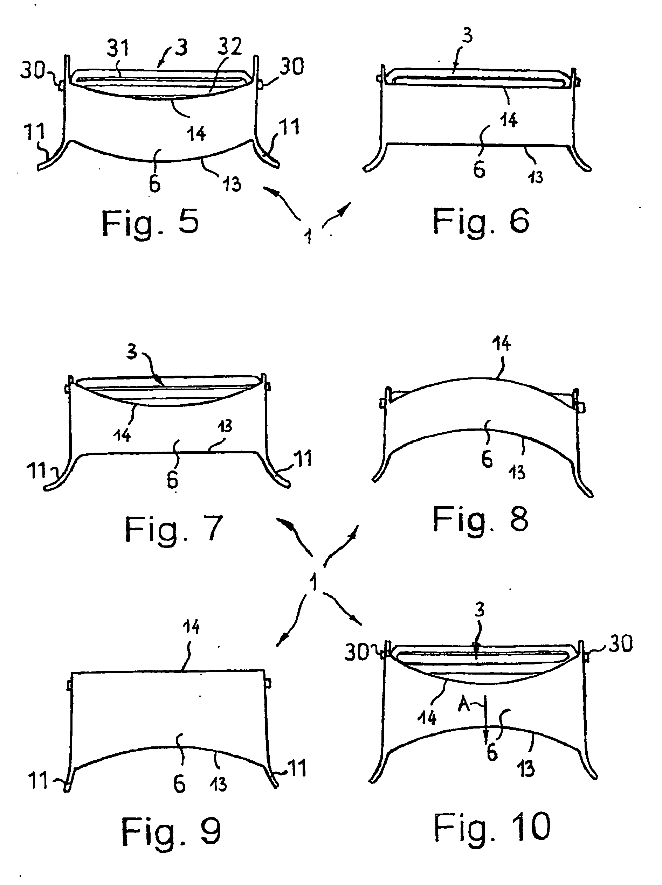

Das Schälmeser 3 ist üblicherweise ein einstückiges, aus Metall oder Kunststoff gefertigtes Element, welches zwei parallele, miteinander verbundene Stege aufweist, wobei der vordere Steg die Schneide 31 des Schälmessers bildet und der hintere Steg den sogenannten Führungssteg 32 des Schälmessers darstellt (siehe Fig. 1 und 5). Der Führungssteg 32 liegt beim Schneiden auf dem zu schälenden Gemüse (nicht dargestellt) auf und bestimmt so die Dicke der abzuschneidenden Schale. Seitlich im Verbindungsbereich von Schneide 31 und Führungssteg 32 sind beidseitig je ein Lagerbolzen 30 angeformt, welche Lagerbolzen die Lagerachse des Schälmessers bilden und geometrisch die Schwenkachse darstellen.

Wie vor allem in den Fig. 1, 5 und 10 angedeutet, ist das Schälmesser 3 gemäss bevorzugter Ausführungsformen in Form einer sogenannten Pendelklinge ausgebildet.

Gemäss einer anderen, nicht gezeigten Variante kann ein Ausstecher in den Seitenflächen In bekannten Formen ausgebildet sein.

Der Halter 2 ist ein- oder mehrteilig ausgebildet, In den dargestellten Ausführungsformen ist der Halter 2 einstückig gezeigt, da dies wohl die wirtschaftlich am günstigsten herstellbare Version ist. Es ist jedoch insbesondere bei kostspieligeren Ausfrahrungsformen auch möglich, unterschiedliche Materialien miteinander zu kombinieren und/oder den Halter mehrstückig auszubilden.

Der Halter 2 des Gemüseschälers 1 hat zwei Seitenflächen 4, welche über das Schälmesser 3 miteinander verbunden sind. Gemäss den in den Fig. 1 bis 10 gezeigten Ausführungsformen bildet jede Seitenfläche 4 eine lagerfläche für das Schälmesser 3. Die Seitenflächen 4 sind über einen Steg 6 miteinander verbunden, welcher etwa quer zur Schälrichtung (siehe Pfeil A in den Fig. 1 und 10) verläuft (siehe Fig. 2). Fig. 1 bis 3 ist zu entnehmen, dass der Steg 6 bei der Benutzung des Gemüseschälers 1 über dem Schälmesser 3 verläuft und quer zur Schälrichtung des zu schälenden Gemüses angeordnet ist.

Wie in Figur 1 und 2 zu entnehmen ist, ist die Breite B des Gemüseschälers 1 im Verhältnis zu der Länge L grösser. Es ist ebenfalls ersichtlich, dass die Höhe H kürzer ist als die Breite B des Gemüseschälers.

In den als Lagerflächen ausgebildeten Seitenflächen 4 sind Achslager 10 geformt, in denen die Lagerbolzen 30 des Schälmessers 3 schwenkbar gelagert sind. Bei aus dem Stand der Technik bekannten Gemüseschälern sind die Seitenflächen 4, vom Griff beabstandet, mittel- oder unmittelbar mit diesem verbunden. Bei dem erfindungsgemässen Gemüseschäler sind die Seitenflächen 4 hingegen als Griffflächen 7 ausgebildet. Die Seitenflächen 4 entsprechen im wesentlichen einander und sind, wie Fig. 4 zu entnehmen ist, spiegelbildlich zueinander aufgebaut und angeordnet. Die gesamten Seitenflächen 4 stellen also sowohl Lagerflächen für das Schälmesser als auch Griffflächen 7 dar. Eine spezielle Ausgestaltung der Griffflächen 7 ist dabei nicht zwingend erforderlich, kann aber die Handhabung des Gemüseschälers weiter vereinfachen. Die Griffflächen 7 sind derart gestaltet, dass sie zwischen dem Daumen und wenigstens einem der Finger einer Hand des Benutzers festklemmbar, d.h. zwischen Daumen und Fingern zum Betätigen des Schälmessers festgehalten werden können.

Wie in Fig. 2 angedeutet, ist in jeder Seitenfläche 4 eine Griffmulde 8 eingeformt. Es ist gemäss einer nicht gezeigten Ausführungsform aber auch möglich, anstelle von Griffmulden Griffnoppen vorzusehen. Während die Griffmulden 8 als von der Halteseite her gesehen konkav gestaltete Vertiefungen ausgebildet sind, sind Griffnoppen bezüglich der Griffseite eher nach aussen vorstehend, d.h. konvex, gestaltet. Beide Varianten dienen jedoch dazu, den Gemüseschäler 1 auch beispielsweise mit feuchten Händen sicher halten zu können.

Jede Griffmulde 8 ist auf der dem Schälmesser 3 gegenüber liegenden Seite der jeweiligen Seitenfläche 4 angeordnet, wie dies in Fig. 2 schematisch dargestellt ist.

Um die Schwenk- oder Pendelbewegung des als Pendelklinge ausgestalteten Schälmessers 3 zu begrenzen, sind an den als Lagerflächen ausgestalteten Seitenflächen 4 nach innen gerichtete Anschläge 5 vorgesehen. Wenigstens eine dieser Seitenflächen hat einen derartigen Anschlag 5. Vorzugsweise sind die Seitenflächen jedoch symmetrisch gestaltet, so dass an beiden Seitenflächen 4 jeweils ein Anschlag 5 angeformt ist. Dies ist ohne nennenswerte Mehrkosten durchführbar. Gemäss den Fig. 2 bis 4 ist der Anschlag 5 als seitlich in die Wangen der Seitenflächen gestanzte Zunge ausgebildet. Bei einer aus Kunststoff ausgebildeten Ausführungsform des Gemüseschälers ist es auch möglich, den Anschlag 5 als nach innen gerichtete Nocke auszuführen. Wie erwähnt, dient der Anschlag 5 dazu, die Schwenkbewegung und damit den Schwenkwinkel des Schälmessers zu begrenzen.

Wie angegeben und in den Fig. 1 bis 10 schematisch dargestellt, sind die Seitenflächen 4 über den Steg 6 miteinander verbunden. Dieser überbrückende Steg 6 kann flach und damit parallel zum Schälmesser verlaufend gestaltet oder wie in den Fig. 2 und 3 angedeutet, konvex nach oben vom Schälmesser 3 weg gewölbt gestaltet sein. Es ist auch möglich, den Steg konkav nach unten zum Schälmesser 3 hin gewölbt auszubilden.

Insbesondere bei einer aus Kunststoff gebildeten Ausführungsform ist es möglich, an der Unterfläche des Steges 6 in den dargestellten Ausführungsformen nicht näher gezeigte Versteifungsrippen anzubringen.

Der Steg 6 ist vorzugsweise als Dekor- oder Werbefläche 9 gestaltet, welche in Fig. 1 lediglich beispielhaft in Form eines Blumenmusters 12 ausgebildet ist. Insofern lässt sich der Steg im Sinne einer Doppelwirkung besonders vorteilhaft als Werbefläche verwenden. Je nach Art der auf dieser Werbefläche 9 aufzubringenden Dekorelemente kann es von Vorteil sein, wenn der Steg flach, d.h. nicht gewölbt, gestaltet ist.

Die in den Fig. 1 bis 10 dargestellten Ausführungsformen verdeutlichen, dass das Schälmesser 3, wie zuvor erwähnt, in Form einer drehbar an den als Lagerflächen ausgestalteten Seitenflächen 4 gehaltenen Pendelklinge ausgebildet ist.

Hinsichtlich der Formgebung des Steges 6 sind viele Ausführungsformen denkbar. Neben der in den Fig. 1 bis 4 gezeigten Ausführungsform sind weitere Ausführungsformen des Steges 6 in den Fig. 5 bis 10 angedeutet.

Gemäss Fig. 5 ist die Vorderkante 13 des Steges 6 konvex, die Hinterkante 14 hingegen konkav gekrümmt. Bei der in Fig. 6 gezeigten Ausführungsform verlaufen sowohl Vorderkante 13 als auch Hinterkante 14 in Form einer geraden Linie, d.h. quer zur Schälrichtung. Gemäss Fig. 7 ist die Vorderkante 13 als gerade Linie, die Hinterkante hingegen konkav gewölbt ausgebildet. Gemäss Fig. 8 ist die Vorderkante 13 konkav, die Hinterkante 14 hingegen konvex gekrümmt; gemäss Fig. 9 ist die Vorderkante 13 konkav, die Hinterkante 14 hingegen als gerade Linie ausgebildet. Ferner ist gemäss Fig. 10 die Vorderkante 13 ebenso wie die Hinterkante 14 konkav ausgebildet, so dass der gesamte Gemüseschäler gewissermassen ein tailliertes Aussehen erhält.

Wie aus den Fig. 5 bis 10 zu ersehen, ist es nicht erforderlich, dass der Steg 6 das Schälmesser 3 abdeckt. Vielmehr kann es für den Benutzer wünschenswert sein, wenn das Schälmesser während des Schälens beobachtet werden kann. Dies trifft insbesondere auf die in den Fig. 5. 6. 7 und 10 gezeigten Ausführungsformen zu. Es ist aber weder für die Sicherheit noch für die Funktion des Gemüseschälers erforderlich, das Schälmesser beim Schälvorgang einsehen zu können.

Während bei der in der Fig. 1 gezeigten Ausführungsform die Seitenflächen 4 bzw. Griffflächen 7 in einem spitzen Winkel zusammenlaufend gestaltet sind, verlaufen bei den in den Fig. 5 bis 10 gezeigten Ausführungsformen die Seitenflächen bzw. Griffflächen parallel zueinander. Die Ausführungsformen gemäss den Fig. 5 bis 10 dürften von der Anatomie her günstiger gestaltet sein. Entsprechend sind auch die Seitenflächen 4 bzw. Griffflächen 7 an ihren von dem Schälmesser 3 weg gerichteten Enden 11 nach aussen gewölbt dargestellt, um einem Aus-der-Hand-Gleiten des Gemüseschälers entgegen zu wirken.

Bei sämtlichen Ausführungsformen sind die Seitenflächen 4 bzw. die Griffflächen 7 so gestaltet, dass sie mit dem Daumen und wenigstens einem Finger einer Hand erfassbar sind. Dabei kann der Zeigefinger auf dem Steg 6 auflegen. Diese Handhabung erlaubt eine ausgesprochen exakte und unmittelbare Führung des gesamten Gemüseschälers und insbesondere des Schälmessers desselben, wobei auch die Aufbringung des Druckes problemlos möglich ist und variabel gehandhabt werden kann. Dies ist bei herkömmlichen Gemüseschälern, bei denen der eigentliche Griff von dem Schälmesser relativ weit weg liegt, nicht möglich.

Gemäss einer weiteren Ausführungsform der Erfindung ist das Schälmesser 3 derart schräg zur Schälebene angeordnet, dass, wie in Fig. 2 gestrichelt angedeutet, Vorderkante 20 und Hinterkante 21 des Schälmessers 3 in verschiedenen horizontalen Ebenen liegen. Bei dieser Ausführungsform ist das Schälmesser 3 jedoch starr mit den Seitenflächen 4 verbunden, so dass in Abhängigkeit von der Lage des Schälmessers 3 relativ zum nicht näher gezeigten Gemüse der Abschälprozess hobelartig durchgeführt werden kann.

Damit ist ein Gemüseschäler geschaffen, welcher aufgrund des direkten Zugriffs unmittelbarer und damit exakter geführt werden kann und damit leichter handhabbar ist.

### Hinweisnummernverzeichnis

- 1: Gemüseschäler
- 2: Halter
- 3: Schälmesser
- 4: Seitenflächen
- 5: Anschlag
- 6: Steg
- 7: Griffflächen
- 8: Griffmulde
- 9: Dekor- oder Werbefläche
- 10: Achslager
- 11: Enden der Seitenflächen
- 12: Blumenmuster
- 13: Vorderkante des Steges
- 14: Hinterkante des Steges
- 15: Halterung
- 16: Innenseite der Seitenfläche
- 17: Längsachse des Schälmessers
- 18: Achse quer zur Schälrichtung
- 19: Winkel
- 20: Vorderkante des Schälmessers
- 21: Hinterkante des Schälmessers
- 30: Lagerbolzen des Schälmessers
- 31: Schneide des Schälmessers
- 32: Führungssteg des Schälmessers

- Pfeil A: Schälrichtung

## Patentansprüche

1. Gemüseschäler mit zwei seitlichen Griffflächen (7) welche durch ein Schälmesser (3), sowie durch einen Steg (6) miteinander verbunden sind, **dadurch gekennzeichnet, dass** die zwei seitlichen Griffflächen (7) und der verbindende Steg (6) einen im Wesentlichen u-förmigen Halter (2) bilden, und der Gemüseschäler, in Schälrichtung (A) kürzer ist als der Abstand (B) zwischen den Griffflächen (7) auf Höhe der Verbindung mit dem Schälmesser.

2. Gemüseschäler nach Anspruch 1, **dadurch gekennzeichnet, dass** die Griffflächen (7) derart gestaltet sind, dass sie zwischen dem Daumen und wenigstens einem der Finger einer Hand festklemmbar sind.

3. Gemüseschäler nach Anspruch 1 oder 2, **dadurch gekennzeichnet, dass** jede Seitenfläche (4) eine Lagerfläche für das Schälmesser (3) bildet.

4. Gemüseschäler nach einem der vorhergehenden Ansprüche, **dadurch gekennzeichnet, dass** die Seitenflächen (4) über einen Steg (6) miteinander verbunden sind, welcher vorzugsweise quer zur Schälrichtung verläuft und als Dekor- oder Werbefläche (9) gestaltet ist.

5. Gemüseschäler nach einem der vorhergehenden Ansprüche, **dadurch gekennzeichnet, dass** der Steg (6) konvex nach oben vom Schälmesser (3) weg oder konkav nach unten zum Schälmesser (3) hin gewölbt ist.

6. Gemüseschäler nach einem der vorhergehenden Ansprüche, **dadurch gekennzeichnet, dass** das Schälmesser (3) in Form einer drehbar an den Seitenflächen (4) gehaltenen Pendelklinge ausgebildet ist.

7. Gemüseschäler nach einem der vorhergehenden Ansprüche, **dadurch gekennzeichnet, dass** die Seitenflächen (4) und der Steg (6) einstückig oder mehrstückig vorzugsweise aus Metallblech oder Kunststoff gefertigt sind.

8. Gemüseschäler nach einem der vorhergehenden Ansprüche, **dadurch gekennzeichnet, dass** in jeder Seitenfläche (4) eine Griffmulde (8) eingeformt ist und die Griffmulde (8) vorzugsweise auf der dem Schälmesser (3) gegenüber liegenden Seite der jeweiligen Seitenfläche (4) angeordnet ist.

9. Gemüseschäler nach einem der vorhergehenden Ansprüche, **dadurch gekennzeichnet, dass** wenigstens eine der Seitenflächen (4) einen Anschlag (5) für das Schälmesser (3) aufweist.

10. Gemüseschäler nach einem der vorhergehenden Ansprüche, **dadurch gekennzeichnet, dass** das Schälmesser (3) in der Schälebene oder parallel zu dieser schräg zur Schälrichtung angeordnet ist.

11. Gemüseschäler nach einem der vorhergehenden Ansprüchen, **dadurch gekennzeichnet, dass** an den Seitenflächen (4) die Lagerflächen für das Schälmesser (3), sowie die Griffflächen (7) ausgebildet sind.

12. Gemüseschäler nach einem der vorhergehenden Ansprüchen, **dadurch gekennzeichnet, dass** der Abstand (B) zwischen den Achslager (10) die grösste Ausdehnung des Gemüseschälers (1) bildet.

13. Gemüseschäler nach einem der vorhergehenden Ansprüche, **dadurch gekennzeichnet, dass** der Steg (6) bei der Benützung über dem Schälmesser (3) verläuft.

## Claims

1. Vegetable peeler with two lateral gripping surfaces (7), interconnected to each other by means of a peeling blade (3) as well as by a cross-piece (6), **characterized in that** the lateral gripping surfaces (7) and the interconnecting cross-piece (6) form a substantially U-shaped holder (2), and that the vegetable peeler in peeling direction (A) is shorter than the distance (B) between the gripping surfaces (7) at the level of the interconnection with the peeling blade (3).

2. Vegetable peeler according to claim 1, **characterized in that** the gripping surfaces (7) are constructed in such a manner that they may be clamped between the thumb and at least one finger of a hand.

3. Vegetable peeler according to claim 1 or 2, **characterized in that** each lateral surface (4) forms a bearing surface for the peeling blade (3).

4. Vegetable peeler according to any of the preceding claims, **characterized in that** the lateral surfaces (4) are interconnected by means of a cross-piece (6), which extends preferably transversely to peeling direction and is formed as a design or advertising surface (9).

5. Vegetable peeler according to any of the preceding claims, **characterized in that** the cross-piece (6) is vaulted convex in upward direction away from the peeling blade (3) or concave in downward direction towards the peeling blade (3).

6. Vegetable peeler according to any of the preceding claims, **characterized in that** the peeling blade (3) is formed as a pendulum blade rotatably held at the lateral surfaces (4).

7. Vegetable peeler according to any of the preceding claims, **characterized in that** the lateral surfaces (4) and the cross-piece (6) are integrally or multisectionally formed, preferably of sheet metal or plastic material.

8. Vegetable peeler according to any of the preceding claims, **characterized in that** a gripping depression (8) is formed into each lateral surface (4), the gripping depression (8) being preferably situated at the side of the respective lateral surface (4) opposite the peeling blade (3).

9. Vegetable peeler according to any of the preceding claims, **characterized in that** at least one of the lateral surfaces (4) comprises an abutment (5) for the peeling blade (3).

10. Vegetable peeler according to any of the preceding claims, **characterized in that** the peeling blade (3) is arranged in the peeling plane or is parallel to it and inclined to the peeling direction.

11. Vegetable peeler according to any of the preceding claims, **characterized in that** the support surfaces for the peeling blade (3) as well as the gripping surfaces (7) are formed on the lateral surfaces (4).

12. Vegetable peeler according to any of the preceding claims, **characterized in that** the distance (B) between the axle bearings (10) forms the largest dimension of the vegetable peeler (1).

13. Vegetable peeler according to any of the preceding claims, **characterized in that** the cross-piece (6) in use extends above the peeling blade (3).

## Revendications

1. Epluche-légumes comprenant deux faces latéraux de manipulation (7), qui sont raccordées l'une à l'autre par un éplucheur (3) ainsi que par une entretoise (6), **caractérisé en ce, que** les deux faces latéraux de manipulation (7) et l'entretoise (6), qui les raccorde, forment une manette (2) sensiblement en forme d'un U, et que l'épluche-légumes est plus court en direction de coupe (A) que la distance (B) entre les faces de manipulation (7) au niveau du raccordement avec l'éplucheur.

2. Epluche-légumes selon la revendication 1, **caractérisé en ce, que** les faces de manipulation (7) sont formées de façon, que l'on les peut serrer entre le pouce et au moins un doigt d'une main.

3. Epluche-légumes selon la revendication 1 ou 2, **caractérise en ce, que** chaque face latérale (4) forme une surface portante pour l'éplucheur (3).

4. Epluche-légumes selon une quelconque des revendications précédentes, **caractérisé en ce, que** les faces latéraux (4) sont raccordées l'une à l'autre par une entretoise (6), qui, de préférence, s'étend transversalement à la direction de coupe, et est formée comme surface de décoration ou de publicité (9).

5. Epluche-légumes selon une quelconque des revendications précédentes, **caractérisé en ce que** l'entretoise (6) est archée d'une façon convexe vers le haut, détournée de l'éplucheur (3) ou d'une façon concave vers le bas et vers l'éplucheur (3).

6. Epluche-légumes selon une quelconque des revendications précédentes, **caractérisé en ce, que** l'éplucheur (3) est construit en forme d'une lame oscillante logé d'une manière rotative aux faces latéraux (4).

7. Epluche-légumes selon une quelconque des revendications précédentes, **caractérisé en ce, que** les faces latéraux (4) et l'entretoise (6) sont produites soit d'une seul partie, soit à plusieurs parties, de préférence d'une tôle en métal ou d'une matière plastique.

8. Epluche-légumes selon une quelconque des revendications précédentes, **caractérisé en ce, qu'**une poignée concave (8) est formée dans chaque face latérale (4), et la poignée (8) est préférablement disposée au côté de la face latérale respective, qui est opposé à l'éplucheur (3).

9. Epluche-légumes selon une quelconque des revendications précédentes, **caractérisé en ce, qu'**au moins une des faces latéraux (4) comprend une butée (5) pour l'éplucheur (3).

10. Epluche-légumes selon une quelconque des revendications précédentes, **caractérisé en ce, que** l'éplucheur (3) est disposé au plan de coupe ou parallèlement à celui-ci, en étant incliné à la direction de coupe.

11. Epluche-légumes selon une quelconque des revendications précédentes, **caractérisé en ce, que** les surfaces de logement pour l'éplucheur (3) ainsi que les faces de manipulation (7) sont formées aux faces latéraux (4).

12. Epluche-légumes selon une quelconque des revendications précédentes, **caractérisé en ce, que** la distance (B) entre les paliers (10) forme la dimension la plus grande de l'épluche-légumes (1).

13. Epluche-légumes selon une quelconque des revendications précédentes, **caractérisé en ce, que** l'entretoise (6), lors de l'utilisation, s'étend au-dessus de l'éplucheur (3).
